## Europäisches Patentamt

## European Patent Office

## Office européen des brevets

(19)

(11) Veröffentlichungsnummer: **0 144 581**
**B1**

(12)

# EUROPÄISCHE PATENTSCHRIFT

(45) Veröffentlichungstag der Patentschrift:
**02.11.88**

(21) Anmeldenummer: **84111441.6**

(22) Anmeldetag: **26.09.84**

(51) Int. Cl.⁴: **B 41 J 3/46**, B 41 J 19/00,
B 41 J 5/30, B 41 J 25/00

(54) **Verfahren und Anordnung zum maschinellen Beschriften eines Formulares.**

(30) Priorität: **11.11.83 DE 3340831**

(43) Veröffentlichungstag der Anmeldung:
**19.06.85 Patentblatt 85/25**

(45) Bekanntmachung des Hinweises auf die Patenterteilung:
**02.11.88 Patentblatt 88/44**

(84) Benannte Vertragsstaaten:
**CH DE FR GB IT LI NL**

(56) Entgegenhaltungen:
**CH-A-595 214**
**DE-A-3 046 037**
**DE-A-3 149 391**
**US-A-4 298 290**

(73) Patentinhaber: **AEG Olympia Aktiengesellschaft,
Postfach 960, D-2940 Wilhelmshaven (DE)**

(72) Erfinder: **Zeising, Norbert, Dipl.- Phys.,
Donnerschweerstrasse 192, D-2900 Oldenburg (DE)**

## Beschreibung

Die Erfindung betrifft ein Verfahren der im Oberbegriff des Patentanspruchs 1 angegebenen Art zum Beschriften eines Formulares mit einer prozessorgesteuerten Schreib- oder ähnlichen Maschine sowie eine Anordnung zur Durchführung dieses Verfahrens.

Das Beschriften von Formularen ist für den Bediener einer Maschine mit besonderen Schwierigkeiten verbunden, weil die Texte in an verschiedenen Stellen des Formulares angeordnete Schreibfelder begrenzter Größe eingetragen werden müssen. Moderne prozessorgesteuerte Maschinen weisen oftmals bereits einen Formularspeicher auf, in den die Konturen und die Lage der einzelnen Schreibfelder eingegeben werden können, indem z. B. die Eckpunkte der einzelnen Schreibfelder auf einem in die Maschine eingespannten Formular mit dem Schreibwerkswagen angesteuert und entsprechende Eingabetasten betätigt werden. Im Speicher ist dann die Anfangsposition für die Beschriftung eines jeden Schreibfeldes enthalten sowie eine Angabe über dessen Breite und Höhe. Beim Ausfüllen eines Formulares im Formularbetrieb der Maschine wird dann die Schreibposition des Schreibwerkswagens nach Einstellung auf die Anfangsposition eines Schreibfeldes automatisch innerhalb der Konturen des Schreibfeldes bewegt, d. h. die rechte Seite des Schreibfeldes wird als rechter Rand, die linke Seite als linker Rand und die Unterseite als unterer Rand gewertet.

Damit wird dem Bediener das Ausfüllen eines Formulares zwar erheblich erleichtert, eine weitere Schwierigkeit besteht aber darin, daß die Länge des Textes die Größe des jeweiligen Schreibfeldes nicht überschreiten darf. Der Bediener ist also ständig damit beschäftigt, die Anzahl der einzugebenden Zeichen und Zeilen zu zählen, um die Kapazität des Schreibfeldes nicht zu überschreiten und wird dennoch häufig durch Aufhebung einer Randsperre über die vorgesehene Begrenzung des Schreibfeldes hinausschreiben müssen.

Durch die DE-A-3 046 037 ist ein Textbearbeitungsgerät bekannt, das neben einer Zeichenanzeige zur Darstellung der zuletzt eingegebenen Zeichen noch einen kleinen Bildschirm im Sichtbereich des Bedieners aufweist. Auf diesem Bildschirm ist die Formatierung eines zu beschriftenden Aufzeichnungsträgers verkleinert darstellbar.

Der Erfindung liegt die Aufgabe zugrunde, das maschinelle Beschriften von Formularen weiterhin zu vereinfachen und den Bediener der Maschine von langwierigen Manipulationsaufgaben zu befreien.

Diese Aufgabe wird erfindungsgemäß durch die im Patentanspruch 1 angegebenen Merkmale gelöst.

Die Vorteile der Erfindung bestehen insbesondere darin, daß das Ausfüllen von Formularen ohne über den Rahmen normalen Maschinenschreibens hinausgehende Aufmerksamkeit des Bedieners erfolgen kann und dennoch eine ordentliche, die Konturen der einzelnen Schreibfelder respektierende Beschriftung erfolgt. Dabei können auch Textlängen, die bei voreingestellter Zeichen- und/oder Zeilenteilung den Rahmen des jeweiligen Schreibfeldes sprengen würden, mit einem großen Toleranzbereich in dem Schreibfeld untergebracht werden. Die Bearbeitung von Formularen wird somit erheblich vereinfacht.

Ein Ausführungsbeispiel der Erfindung ist in den Zeichnungen dargestellt und wird nachfolgend näher erläutert. Es zeigen

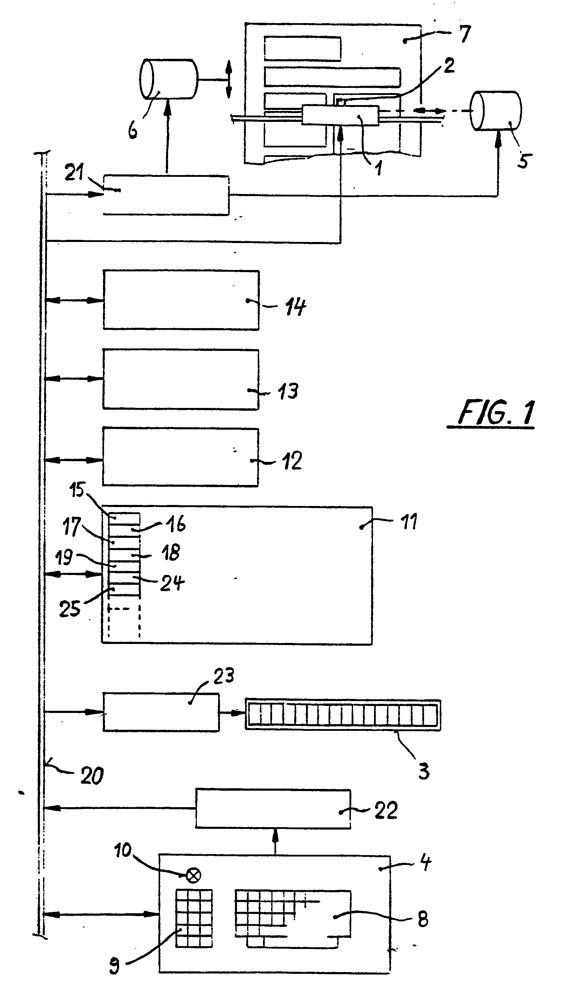

Figur 1    ein Blockschaltbild
Figur 2    ein Flußdiagramm

Als Ausführungsbeispiel wird eine Speicherschreibmaschine zugrunde gelegt, die ein Rasterschreibwerk 1 mit einem Tintenschreibkopf 2 für die Zeichenausgabe und eine Zeilenanzeigeeinrichtung 3 zur Anzeige von über eine Tastatur 4 eingegebenen alpha/numerischen Daten aufweist. Der Tintenschreibkopf 2 ist mit einer Reihe untereinander angeordneter Düsen versehen, die bei gleichzeitiger Ansteuerung eine entsprechende Reihe von Tintenpunkten auf einem Aufzeichnungsträger abzubilden vermögen. Durch schrittweise Horizontalverschiebung des Schreibwerkes 1 und jeweils erneuter Ansteuerung der Schreibdüsen kann somit ein gerastertes Punktefeld erzeugt werden, das jeweils eine Zeichenfläche überdeckt, innerhalb derer bei Ansteuerung nur einiger ausgewählter Schreibdüsen ein beliebiges alpha/numerisches Zeichen in bekannter Weise dargestellt werden kann. Ein jedes Zeichen wird somit in einer Anzahl fein unterteilter Grundschritte erzeugt, und der Zwischenraum zwischen benachbarten Zeichen ist ebenfalls aus einer Anzahl von Grundschritten zusammengesetzt. Für die Horizontalverschiebung ist ein Schrittmotor 5 vorgesehen, von dem das Schreibwerk 1 in entsprechend fein unterteilten Schritten antreibbar ist.

Ein weiterer Schrittmotor 6 dient als Antrieb für den Vertikalvorschub eines in die Maschine eingespannten Aufzeichnungsträgers 7. Auch der Vertikalvorschub ist in kleinen Schritten ausführbar, die beispielsweise die Größe des Düsenabstandes im Tintenschreibkopf 2 aufweisen. Die von den Düsen des Tintenschreibkopfes 2 gebildete Schreibposition des Schreibwerkes 1 ist somit durch Ansteuerung der Schrittmotoren 5 und 6 in horizontaler und vertikaler Richtung relativ zum Aufzeichnungsträger 7 in Grundschritten einstellbar.

Die Tastatur 4 weist ein alpha/numerisches Tastenfeld 8 für die Zeicheneingabe sowie ein Funktionstastenfeld 9 für die Eingabe von Befehlen und Vorgabe von Betriebsbedingungen auf und ist daneben mit einer Fehlerlampe 10 versehen. Die Anzeigeeinrichtung 3 ist so ausgelegt, daß mindestens ein Teil einer vollen Textzeile dargestellt werden kann, sodaß der Bediener der Maschine auch bei nicht unmittelbarem Ausdruck der eingegebenen Zeichen eine Kontrolle über die Richtigkeit des Textes hat.

Die Maschinensteuerung wird im Wesentlichen von einem Mikroprozessor gebildet, der unter anderem eine Rechen- und Steuerschaltung 11, einen Programmspeicher 12, einen Textdatenspeicher 13 und einen Formulardatenspeicher 14 aufweist. Text- und Formulardatenspeicher können selbstverständlich auch Bestandteil eines einzigen Datenspeichers sein. Der Programmdatenspeicher 12 enthält die zur Steuerung der Maschine durch den Mikroprozessor erforderlichen Programmroutinen. Außerdem sind noch ein Zähler 15, ein Vergleicher 16 und eine Reihe von Registern vorgesehen, von denen hier nur die für ein Verständnis der Erfindung erforderlichen Register für den Zeichenabstand 17 und für einen veränderten Zeichenabstand 25, für den Zeilenabstand 18 und für einen veränderten Zeilenabstand 24 sowie ein Merkerregister 19 schematisch dargestellt sind. Die Register 17 - 19, 24, 25 können wiederum Bestandteile des Datenspeichers sein, während Vergleicher 16 und Zähler 15 auch durch programmgesteuerter Rechenfunktionen der Rechen- und Steuerschaltung 11 darstellbar sind. Die Baugruppen der Steuerung sind untereinander sowie mit den peripheren Baugruppen Tastatur 4, Schreibwerk 1 und Anzeigeeinrichtung 3 über eine gemeinsame Sammelleitung 20 verbunden.

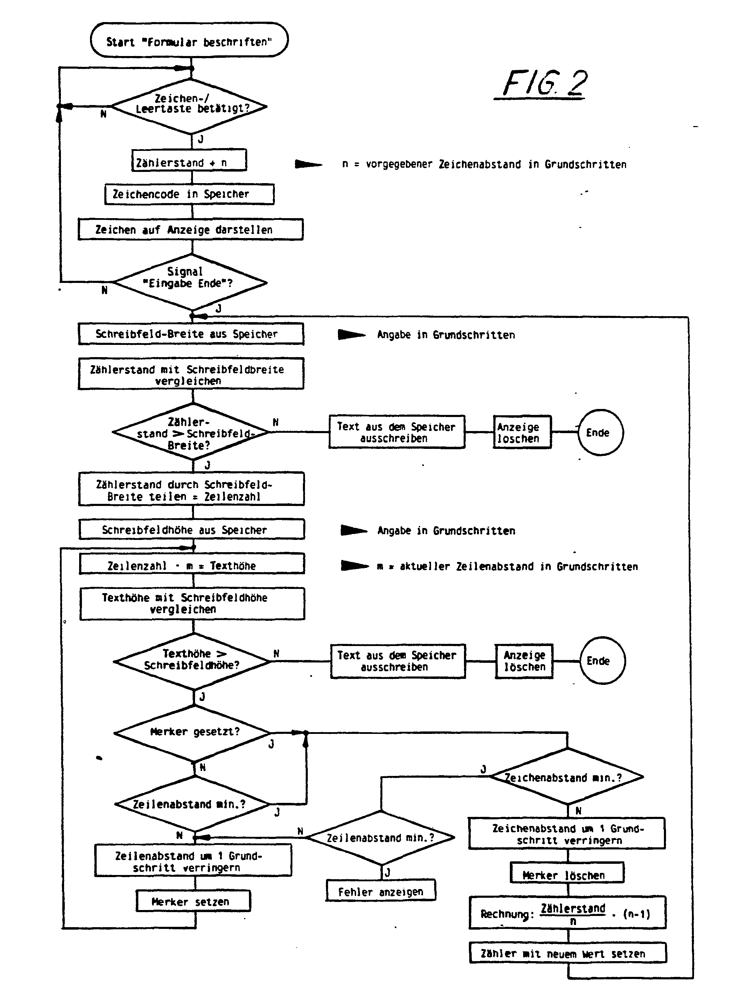

Es soll nun angenommen werden, daß als Aufzeichungsträger 7 ein Formular in die Maschine eingespannt ist, das diverse zu beschriftende Schreibfelder aufweist. Sofern dessen Formulardaten noch nicht im Formulardatenspeicher 14 enthalten sind, wird zunächst die Eingabe der Formulardaten durch Eingabe eines entsprechenden Befehls mit dem Funktionstastenfeld 9 vorbereitet. Das Schreibwerk 1 bzw. der Aufzeichnungsträger 7 werden nun derart verschoben, daß die Schreibposition des Schreibwerkes 1 nacheinander den linken und rechten Rand der oberen Zeile sowie den unteren Rand eines jeden Schreibfeldes einnimmt, wobei die Betätigung zugeordneter Tasten im Funktionstastenfeld 9 die Übernahme der vollen entsprechenden Positionsdaten durch die Maschinensteuerung veranlaßt. Im Formulardatenspeicher 14 werden dann für jedes Schreibfeld die Anfangspositionen für die Beschriftung, die Breite des Schreibfeldes in Grundschritten und die Höhe des Schreibfeldes in Grundschritten gespeichert. Im Zeichenabstandsregister 17 steht ein vom Bediener vorgegebener Wert für einen Zeichenabstand und im Zeilenabstandsregister 18 ein Wert für den Zeilenabstand. Bei Eingabe eines Befehles "Formular beschriften" werden der Zähler 15 und der Merker 19 auf "0" gesetzt und die Register 24, 25 für veränderten Zeilen- und Zeichenabstand gelöscht. Die Beschriftung des Formulares (Aufzeichnungsträger 7) kann nunmehr beginnen und wird nachfolgend anhand des Flußdiagrammes der Fig. 2 erläutert.

Ein mit dem Funktionstastenfeld 9 ausgelöster Sprungbefehl bewirkt, daß das Schreibwerk 1 und der Aufzeichnungsträger 7 verschoben werden, bis die Schreibposition gegenüber der Anfangsposition des ersten Schreibfeldes zu stehen kommt. Die hierfür erforderlichen Ansteuerbefehle für die beiden Schrittmotoren 5, 6 werden einer Ansteuerschaltung 21 zugeführt, die demgemäß die benötigten Motor-Ansteuersignale erzeugt. Eingabesignale betätigter Zeichentasten des alpha/numerischen Tastenfeldes 8 werden einem Codierer 22 zugeführt, der daraus die zugehörigen Zeichendaten ableitet, die einerseits im Textdatenspeicher 13 abgelegt, andererseits einer Ansteuerschaltung 23 für eine Darstellung auf der Anzeigeeinrichtung 3 zugeführt werden. Das Schreibwerk 1 bleibt während der gesamten Eingabe für das Schreibfeld unverändert in der Anfangsposition stehen. Die Eingabe eines jeden Zeichens oder Leerschrittes bewirkt weiterhin, daß der Zähler 15 um einen Betrag erhöht wird, der der Grundschritt-Anzahl des im Zeichenabstands-Registers 17 gespeicherten Zeichenabstandes entspricht. Dieser Betrag umfaßt die Anzahl erforderlicher Grundschritte für das Zeichen sowie für den nachfolgenden Zeichenzwischenraum. Nach Eingabe des gesamten in das Schreibfeld einzutragenden Textes wird eine "Eingabe Ende"-Taste des Funktionstastenfeldes 9 betätigt. Die Rechen- und Steuerschaltung 11 veranlaßt nunmehr, daß die Schreibfeld-Breite des durch die Schreibwerksstellung adressierten Schreibfeldes aus dem Formulardatenspeicher 14 entnommen und gemeinsam mit dem Stand des Zählers 15 dem Vergleicher 16 zugeführt wird. Ergibt sich aus dem Vergleich, daß die Schreibfeld-Breite gleich dem oder größer als der Zählerstand ist, so wird ohne weiteres der Text aus dem Textdatenspeicher 13 ausgelesen und vom Schreibwerk 1 in das Schreibfeld eingeschrieben. Die Darstellung auf der Anzeigeeinrichtung 3 wird gelöscht.

Ergibt der Vergleich aber, daß der Zählerstand größer als die Schreibfeld-Breite ist, so ermittelt die Rechen- und Steuerschaltung 11 die erforderliche Zeilenzahl unter Berücksichtigung der Schreibfeld-Breite dadurch, daß der Zählerstand durch die Schreibfeld-Breite geteilt wird. Danach wird die Schreibfeld-Höhe aus dem Formulardatenspeicher 14 entnommen und dem Vergleicher zugeführt. Die ermittelte Zeilenzahl wird mit der Anzahl der Grundschritte multipliziert, die dem Zeilenabstand im Zeilenabstandsregister 18 entspricht, sodaß sich die Texthöhe in Grundschritten ergibt. Im Vergleicher wird nunmehr die Texthöhe mit der Schreibfeldhöhe verglichen und, wenn die Schreibfeldhöhe gleich der oder kleiner als die Texthöhe ist, der Text unter Berücksichtigung der Schreibfeldkonturen ausgeschrieben. Die Darstellung auf der Anzeigeeinrichtung 3 wird gelöscht.

Ist die Texthöhe hingegen größer als die Schreibfeldhöhe so wird der Merker abgefragt, ob er gesetzt oder gelöscht ist. Ist der Merker gelöscht, so erfolgt eine weitere Abfrage, ob der im Zeilenabstandsregister 18 vorgegebene Zeilenabstand bereits der maschinell mögliche Mindestabstand ist. Bei Verneinung dieser Abfrage wird das Register 24 für einen veränderten Zeilenabstand mit einem Wert gesetzt, der dem um einen Grundschritt verringerten aktuellen Zeilenabstand entspricht. (Der aktuelle Zeilenabstand weist beim ersten Durchlauf die im Zeilenabstandsregister 18 stehende Größe auf, bei jedem weiteren Durchlauf aber die in Register 24 stehende veränderte Größe.) Der Merker 19 wird nunmehr gesetzt, um anzuzeigen, daß die letzte Operation eine Verringerung der Texthöhe zur Folge hatte.

Es schließt sich nun in der bereits beschriebenen Weise eine Prüfung an, ob die Texthöhe noch immer größer als die Schreibfeldhöhe ist. Ist dies der Fall, so wird, weil nunmehr der Merker 19 gesetzt ist, eine Abfrage durchgeführt, ob der horizontale Zeichenabstand bereits die maschinell mögliche Mindestgröße aufweist. Ist dies nicht der Fall, so wird der aktuelle Zeichenabstand um einen Grundschritt verringert und ein entsprechender Wert in das Register 25 für veränderten Zeichenabstand eingespeichert. (Der aktuelle Zeichenabstand entspricht beim ersten Durchlauf dem im Zeichenabstandsregister 17 stehenden Wert, bei jedem weiteren Durchlauf dem im Register 25 für veränderten Zeichenabstand stehender Wert.) Der Merker 19 wird gelöscht und der Zählerstand wird korrigiert, indem nunmehr der neue, um einen Grundschritt verringerte Zeichenabstand zugrunde gelegt wird (Berechnung:

$$\frac{\text{Zählerstand}}{\text{alter Zeichenabstand}}$$

(Alter Zeichenabstand- 1)).

Danach wird wiederum die beschriebene Prüfung durchgeführt, ob der Text in der solcherart verkleinerten Form nunmehr in das Schreibfeld hineinpaßt.

Ist die für den Text benötigte Fläche noch immer zu groß, so werden die beschriebenen Abläufe wiederholt durchgeführt, wobei ständig im Wechsel der Zeilenabstand und der Zeichenabstand um jeweils einen Grundschritt verringert werden. Hierbei kann es geschehen, daß eine der beiden Abstände die maschinenbedingt geringstmögliche Größe erreicht und in dieser Richtung keine weitere Verkleinerung möglich ist. Dann erfolgt sofort eine Prüfung des jeweils anderen Abstandes, sodaß dann nicht mehr beide Dimensionen wechselweise verringert werden, sondern nur noch diejenige, bei der die Verringerung noch möglich ist. Sollte jedoch trotz Ausschöpfung aller Verkleinerungsmöglichkeiten die für den Text benötigte Fläche noch immer die Größe des Schreibfeldes überschreiten, so findet kein automatisches Ausschreiben durch das Schreibwerk 1 statt, sondern die Fehlerlampe 10 wird angesteuert, um den Bediener auf die Notwendigkeit seines Eingreifens aufmerksam zu machen. Ist hingegen die automatische Beschriftung des Schreibfeldes in einem der Schreibfeldgröße angepaßten Zeichen- und Zeilenabstand erfolgt, so kann der Bediener durch Betätigung einer Sprung-Befehlstaste im Funktionstastenfeld 9 die Positionierung des Schreibwerkes 1 auf die Anfangsposition des nächsten im Formulardatenspeicher 14 festgelegten Schreibfeldes auslösen und damit die Schreibwerksteuerung für die Beschriftung dieses nunmehr adressierten Schreibfeldes in der zuvor beschriebenen Weise vorbereiten.

Eine noch weitergehende Möglichkeit der Textgrößenanpassung an ein begrenztes Schreibfeld ist mit einem Schreibwerk der im Ausführungsbeispiel zugrunde gelegten Art möglich, indem die Schriftzeichen in ihrer Höhe und/oder Breite verringert werden. Bei einem Punktraster-Schreibwerk, bei dem die Zeichen in einem Raster von z. B. 8 x 12 Punken dargestellt werden, kann in einem begrenzten Umfang sowohl die horizontale als auch die vertikale Punktezahl verringert werden, sodaß die Zeichen kleiner und damit Zeichen- und Zeilenabstände geringer werden. Gleiches gilt selbstverständlich auch für Nadeldruckwerke oder Schreibwerke bei denen die Schriftzeichen durch Ablenkung eines Schreibstrahles oder Schreibstiftes erzeugt werden.

Die für ein Schreibverfahren mit gleichmäßigem Zeichenabstand beschriebene Erfindung ist selbstverständlich auch für sogenannte proportionale Schriftarten anwendbar. Während die Verringerung des Zeilenabstandes unverändert in der beschriebenen Art erfolgen könnte, müßte die jeweilige Berechnung und Verringerung der Textzeilenlänge unter Berücksichtigung jedes einzelnen Zeichens im auszuschreibenen Text vorgenommen werden. Das setzt zwar einen komplizierteren internen Berechnungs- und Steuerungsablauf voraus, ändert aber nichts am grundsätzlichen Erfindungsgedanken.

Die Erfindung ist auch nicht auf Schreibwerke der im Ausführungsbeispiel gewählten Art beschränkt; auch eine normale Typenschreibmaschine ist für das erfindungsgemäße Verfahren geeignet, wenn sich die Zeilen- und Zeichenzwischenräume antriebs- und steuerungsmäßig in mehrere Schritte aufteilen lassen. Es muß auch nicht ein stetiger Wechsel zwischen der Verkleinerung des Zeilenabstandes und der Verkleinerung des

Zeichenabstandes erfolgen, die Wahl, mit welchen Prioritäten die jeweiligen Abstände verkleinert werden, kann nach beliebigen anderen Gesichtspunkten getroffen sein. Es kann auch ein Bildschirm mit einer Darstellung des auszufüllenden Formulares als Eingabemedium Verwendung finden. Ein Cursor kann hier zur Markierung der Anfangspositionen in einem zu beschriftenden Schreibfeld eingesetzt werden, und die eingegebenen Zeichen können zunächst ohne Beachtung der Schreibfeldkonturen dargestellt werden. Erst ein nachfolgender Befehl zur Größenanpassung würde dann den beschriebenen Funktionsablauf auslösen und eine Veränderung der Darstellung auf dem Bildschirm bewirken. Selbstverständlich können auch einfachere Maschinen ohne Bildschirm oder Anzeigeeinrichtung mit Anordnungen zur Ausführung des erfindungsgemäßen Verfahrens ausgestattet sein.

**Patentansprüche**

1. Verfahren zum Beschriften eines Formulares (7) mit einer prozessorgesteuerten Schreib- o. ä. Maschine, die einen Formularspeicher (14) zur Aufnahme von Lage- und/oder Größenangaben für verschiedene Schreibfelder auf Formularen (7) zur Steuerung der Schreibpositionsbewegung des Schreibwerkes (1) innerhalb der Schreibfeldkonturen, einen Textdatenspeicher (13), aus dem gespeicherter Text automatisch ausschreibbar ist, und Einrichtungen zur Voreinstellung eines Zeichenabstandes und eines Zeilenabstandes aufweist, dadurch gekennzeichnet, daß vor dem Ausschreiben des in den Textdatenspeicher (13) eingegebenen, in ein adressiertes Schreibfeld eines Formulares (7) einzufügenden Textes die Textlänge mit der sich ggfs. über mehrere Zeilen des Schreibfeldes erstreckenden Zeilenlänge verglichen und bei einer die Zeilenlänge überschreitenden Textlänge der Zeichen- und/oder Zeilenabstand so lange verkleinert wird, bis die Textlänge mindestens gleich der Zeilenlänge ist.

2. Verfahren nach Anspruch 1 mit einem Schreibwerk, mit dem die Schriftzeichen in verschiedenen Größen ausschreibbar sind, dadurch gekennzeichnet, daß bei einer die Zeilenlänge überschreitenden Textlänge die Breite und/oder Höhe der Schriftzeichen verringert wird.

3. Verfahren nach Anspruch 1 oder 2, dadurch gekennzeichnet, daß bei Erreichen der Verkleinerungsgrenzen und Feststellung einer die Zeilenlänge überschreitenden Textlänge das Ausschreiben des Textes verhindert und ein Fehlersignal erzeugt wird.

4. Verfahren nach einem der vorhergehenden Ansprüche, dadurch gekennzeichnet, daß der Zeichenabstand aus mehreren Grundschritten für Zeichenbreite und Zeichenzwischenraum und der Zeilenabstand aus mehreren Grundschritten für Zeichenhöhe und Zeilenzwischenraum besteht, in denen die Einstellung der Schreibposition gegenüber einem Aufzeichnungsträger (7) steuerbar ist, und daß die Verkleinerung der Zeichen- und Zeilenabstände sowie ggfs. die Verringerung der Schriftzeichengröße in Grundschritten erfolgt.

5. Anordnung zur Durchführung des Verfahrens mit Antriebsvorrichtungen (5, 6) zur horizontalen und vertikalen Relativbewegung der Schreibposition gegenüber einem Aufzeichnungsträger (7) in Grundschritten nach einem der vorhergehenden Ansprüche, gekennzeichnet durch ein erstes Register (17, 25) für die Speicherung eines einen Zeichenabstand angebenden Wertes,
ein zweites Register (18, 24) für die Speicherung eines
einen Zeilenabstand angebenden Wertes,
einen Zähler (15) zur Ermittlung der Grundschritte des gespeicherten, auszuschreibenden Textes,
eine Rechenschaltung (11) zur Ermittlung der ggfs. aus mehreren Zeilen bestehenden Zeilenlänge eines Schreibfeldes in Grundschritten,
einen Vergleicher (16) zur Ermittlung der Größe des Zählergebnisses gegenüber dem Rechenergebnis
und eine Steuerschaltung (11) zur Veränderung des Zeichenund/oder Zeilenabstandes sowie ggfs. der Zeichenbreite und/oder -höhe in Abhängigkeit vom Vergleichsergebnis.

**Claims**

1. A method of inscribing a form (7) with a processor controlled typewriter or similar machine, which has a form store (14) for accommodating position and/or size details for different inscription areas on forms (7) in order to control the movement of the print position of the printing mechanism (1) within the outlines of the inscription area, has a text data store (13) from which stored text may be printed out automatically, and devices for presetting a pitch and a line spacing, characterised in that before printing out the text, entered in the text data store (13) and which is to be inserted into an addressed inscription area of a form (7), the length of the text is compared to the line length, which may possibly extend over several lines, of the inscription area and when the text length exceeds the line length the pitch and/or line spacing is reduced until the text length is at least equal to the line length.

2. A method according to claim 1 having a printing mechanism with which the inscription characters may be printed out in different sizes, characterised in that when the text length exceeds the line length the width and/or height of the inscription characters is reduced.

3. A method according to claim 1 or 2, characterised in that when the reduction limits are reached and a text length exceeding the line length is identified, printout of the text is prevented and an error signal is produced.

4. A method according to any one of the preceding claims, characterised in that the pitch comprises several basic steps for character width and space between characters, and that the line spacing comprises several basic steps for character height and space between lines, in which the adjustment of the print position in relation to a recording medium (7) may be controlled, and that the reduction of the pitch and line spacings and possibly the decrease in the size of the inscription characters takes place in basic steps.

5. An arrangement for carrying out the method having drive devices (5, 6) for horizontal and vertical relative movement of the print position in relation to a recording medium (7) in basic steps according to any one of the preceding claims, characterised by:

a first register (17, 25) for storing a value indicating a pitch,

a second register (18, 24) for storing a value indicating line spacing,

a counter (15) for determining the basic steps of the stored text which is to be printed out,

a computing circuit (11) for determining in basic steps the line length of an inscription area, which may consist of several lines,

a comparator (16) for determining the size of the counter result in relation to the computed result

and a control circuit (11) for changing the pitch and/or line spacing and possibly the character width and/or height, depending on the result of comparison.

**Revendications**

1. Procédé pour remplir un formulaire (7) avec une machine à écrire ou machine analogue commandée par ordinateur et comportant une mémoire (14) de formulaire destinée à recevoir des données d'emplacement et/ou de grandeur de diverses plages de report sur des formulaires (7), pour commander le déplacement de la position de transcription du groupe (1) d'écriture à l'intérieur du contour des plages, une mémoire (13) de données de texte, d'où le texte mémorisé peut être transcrit automatiquement, et des dispositifs destinés à prédéterminer un écartement entre caractères et un écartement entre lignes, procédé caractérisé en ce que, avant la transcription du texte, introduit dans la mémoire (13), sur une plage considérée d'un formulaire (7), la longueur de ce texte, qui s'étend le cas échéant sur plusieurs lignes de la plage, est comparée à la longueur des lignes, et si cette longueur du texte est supérieure à la longueur des lignes, l'écart entre les caractères et/ou l'écart entre les lignes est ou sont réduit(s) jusqu'à ce que la longueur du texte soit au plus égale à celle des lignes.

2. Procédé selon la revendication 1, mis en oeuvre avec un groupe d'écriture avec lequel les caractères peuvent être reproduits en diverses grandeurs, procédé caractérisé en ce que, lorsque la longueur du texte est supérieure à celle des lignes, la largeur et/ou la hauteur des caractères sont réduits.

3. Procédé selon la revendication 1 ou 2, caractérisé en ce que, lorsque les limites de réduction sont atteintes et qu'il a été constaté que la longueur du texte reste supérieure à celle des lignes, la transcription de ce texte est empêchée et un signal de défaut est émis.

4. Procédé selon l'une des revendications précédentes, caractérisé en ce que l'écartement entre caractères se compose d'un certain nombre de pas de base pour la largeur des caractères et leur espacement, et l'écartement des lignes est composé d'un certain nombre de pas de base pour la hauteur des caractères et la distance entre les lignes, pas avec lesquels il est possible de commander le réglage de la position de transcription par rapport à un support (7) d'enregistrement, et en ce que la réduction des écartements entre caractères et entre lignes ainsi que la réduction de la grosseur des caractères ont lieu par pas de base.

5. Dispositif pour la mise en oeuvre du procédé selon l'une des revendications précédentes, comportant des dispositifs (5, 6) d'entraînement destinés à déplacer horizontalement et verticalement, par pas de base, la position de transcription par rapport à un support (7) d'enregistrement, dispositif caractérisé en ce qu'il comporte

un premier enregistreur (17, 25), destiné à mémoriser une valeur représentant un écartement entre caractères;

un second enregistreur (18, 24), destiné à mémoriser une valeur représentant un écartement entre lignes ;

un compteur (15), destiné à déterminer le nombre de pas de base du texte mémorisé qu'il s'agit de transcrire;

un circuit (11) de calcul destiné à déterminer en pas de base la longueur de lignes, composée éventuellement de plusieurs lignes, d'une plage de report,

un comparateur (16) destiné à déterminer la valeur du résultat du comptage par rapport au résultat du calcul; et

un circuit (11) de commande, destiné à modifier l'écart entre caractères et/ou entre lignes, ainsi éventuellement que la largeur et/ou la hauteur de ces caractères en fonction du résultat de la comparaison.

*FIG. 1*

# FIG. 2

Start "Formular beschriften"

Zeichen-/ Leertaste betätigt? — N

J

Zählerstand + n ▶ n = vorgegebener Zeichenabstand in Grundschritten

Zeichencode in Speicher

Zeichen auf Anzeige darstellen

Signal "Eingabe Ende"? — N

J

Schreibfeld-Breite aus Speicher ▶ Angabe in Grundschritten

Zählerstand mit Schreibfeldbreite vergleichen

Zähler- stand > Schreibfeld- Breite? — N ▶ Text aus dem Speicher ausschreiben → Anzeige löschen → Ende

J

Zählerstand durch Schreibfeld- Breite teilen = Zeilenzahl

Schreibfeldhöhe aus Speicher ▶ Angabe in Grundschritten

Zeilenzahl · m = Texthöhe ▶ m = aktueller Zeilenabstand in Grundschritten

Texthöhe mit Schreibfeldhöhe vergleichen

Texthöhe > Schreibfeldhöhe? — N ▶ Text aus dem Speicher ausschreiben → Anzeige löschen → Ende

J

Merker gesetzt? — J

N

Zeilenabstand min.? — J

N

Zeilenabstand um 1 Grund- schritt verringern

Merker setzen

Zeilenabstand min.? — N

J

Fehler anzeigen

Zeichenabstand min.? — J

N

Zeichenabstand um 1 Grund- schritt verringern

Merker löschen

Rechnung: $\dfrac{\text{Zählerstand}}{n} \cdot (n-1)$

Zähler mit neuem Wert setzen